# EUROPÄISCHE PATENTANMELDUNG

(11) **EP 4 603 814 A1**
(43) Veröffentlichungstag der Anmeldung: **20.08.2025**
(21) Anmeldenummer: 24020056.8
(22) Anmeldetag: 16.02.2024
(51) Int. Cl.: G01K 5/28, G01K 1/143, G01K 13/00, G01K 13/02, F17C 13/00

(54) **VERFAHREN ZUM BESTIMMEN EINER TEMPERATUR EINER WAND EINES ISOLIERTEN BEHÄLTNISSES UND ANORDNUNG HIERZU**

(71) Anmelder: Linde GmbH, 82049 Pullach (DE)
(72) Erfinder: Herrenkind, Jonas, 82049 Pullach (DE); Mickan, Jörg, 82049 Pullach (DE); Tirlea, Stelian, 82049 Pullach (DE); Wellenhofer, Anton, 82049 Pullach (DE); Toneva, Petya, 82049 Pullach (DE)
(74) Vertreter: Meilinger, Claudia Sabine

(57) **Zusammenfassung**

Die Erfindung betrifft Verfahren zum Bestimmen einer Temperatur einer Wand (104) eines isolierten Behältnisses (102), wobei zwischen der Wand (104) und einer Isolationswandung (108) ein Isolationsraum (V) vorgesehen ist, wobei ein an die Wand (104) angrenzender, geschlossener Messraum (112) bereitgestellt wird, wobei der Messraum (112) zumindest teilweise innerhalb des Isolationsraums (V) vorgesehen ist oder wird, wobei der Messraum (112) mit einem Messgas (M) befüllt ist oder wird, sodass das Messgas (M) mit der Wand (104) in Kontakt ist, wobei ein Druck des Messgases (M) in dem Messraum (112) bestimmt wird, und wobei basierend auf dem Druck des Messgases (M) die Temperatur der Wand (104) bestimmt wird.

## Beschreibung

Die Erfindung betrifft ein Verfahren zum Bestimmen einer Temperatur einer Wand eines isolierten Behältnisses, wobei zwischen der Wand und einer Isolationswandung ein Isolationsraum vorgesehen ist, sowie eine Anordnung aufweisend ein isoliertes Behältnis mit einer Wand und einer Isolationswandung.

Isolierte Behältnisse wie z.B. isolierte Prozessleitungen können in vielen Anwendungen eingesetzt werden, wie insbesondere beim Speichern oder Transfer von tiefkalten Prozessfluiden, z.B. Wasserstoff, Helium, Sauerstoff oder andere Gasen oder Fluiden. Dabei ist häufig eine Überwachung oder Bestimmung der Temperatur von in einem solchen Behältnis gespeicherten oder geförderten Prozessfluids erforderlich oder zumindest gewünscht. Hierzu kann die Temperatur an einer Wand des Behältnisses gemessen werden, indem ein Temperatursensor an der Wand angebracht wird.

Dies erfordert jedoch eine thermische Unterbrechung der Isolierung um den Temperatursensor an der Wand anbringen zu können und insbesondere eine (elektrische) Zuleitung herausführen zu können. Zudem ist dies häufig aufwändig zu gestalten.

Vor diesem Hintergrund stellt sich die Aufgabe, eine verbesserte Möglichkeit zum Bestimmen einer Temperatur einer Wand eines isolierten Behältnisses anzugeben.

### Offenbarung der Erfindung

Diese Aufgabe wird durch ein Verfahren zum Bestimmen einer Temperatur einer Wand eines isolierten Behältnisses sowie eine Anordnung hierzu mit den Merkmalen der unabhängigen Patentansprüche gelöst. Bevorzugte Ausgestaltungen sind Gegenstand der abhängigen Patentansprüche sowie der nachfolgenden Beschreibung.

Die Erfindung beschäftigt sich dem Bestimmen einer Temperatur einer Wand eines isolierten Behältnisses, bei dem zwischen der Wand und einer Isolationswandung ein Isolationsraum vorgesehen ist. Der Isolationsraum ist dabei insbesondere evakuiert, d.h. es handelt sich um ein vakuumisoliertes Behältnis. Allgemein kann aber der Isolationsraum auch einfach nur ein Restgas mit einen sehr geringen Druck, z.B. weniger als 1 mbar, aufweisen. Die Wand steht damit also in thermischem Kontakt zu z.B. einem Prozessfluids oder Prozessgas, das in dem Behältnis gespeichert oder gefördert wird. Als Behältnis kommt hier z.B. eine Prozessleitung in Betracht, wobei die wobei die Wand dann zumindest einen Teil einer Außenwand der Prozessleitung umfasst. Im Fall einer solchen Prozessleitung kann diese von einer Isolationsleitung als Isolationswandung umgeben sein.

Bei der Messung der Temperatur der Wand (Wandtemperatur) an der Prozessleitung oder allgemein einem Behältnis mit Temperatursensoren oder Temperaturfühlern ist bei isolierten bzw. vakuumisolierten Rohr- oder Prozessleitungen eine Unterbrechung der Isolierung notwendig, um den Temperatursensor (oder eine Mess- oder Temperaturhülse davon) an die Wand der Prozessleitung anzubringen. Dies ist mit einem erhöhten fertigungstechnischen Aufwand und mit Wärmeverlusten (nicht ideale Isolierung) verbunden. Die zusätzliche Wand der Temperaturhülse führt zudem zu einer verzögerten Detektion der Temperaturänderung im Prozessraum. Weitere Schwierigkeiten ergeben sich bei tiefkalten Prozessfluiden oder sonstigen Medien durch eine mögliche Luftkondensation in der Temperaturmesshülse auf Grund einer Undichtigkeit der Temperaturmesshülse zur Atmosphäre. Dies führt zu starken Ungenauigkeiten der Messung im Temperaturbereich unterhalb der Kondensationstemperatur der Luftbestandteile.

Des Weiteren sind folgende Nachteile der Temperaturmessung mittels Temperaturfühler zu berücksichtigen. Ein Temperaturfühler misst immer seine eigene Temperatur, d.h. die Verbindung zwischen der Prozessleitung und dem Temperaturfühler übt einen signifikanten Einfluss auf die Messgenauigkeit aus (der Wärmeübergang findet durch Kontakt statt, die Fühlertemperatur wird durch die Wärmeleitung der Fühlerkonstruktion zum Temperaturfühler hin bei extrem tiefen Temperaturen signifikant beeinflusst - der Temperaturfühler misst in der Regel eine viel zu warme bzw. hohe Temperatur). Eine Kalibrierung im Tieftemperaturbereich ist schwierig, und eine Installation eines wiederausbaubaren Temperaturfühlers durch oben genannte Problematik erweist sich als herausfordernd.

Im Rahmen der vorliegenden Erfindung wird nun vorgeschlagen, dass ein an die Wand angrenzender, geschlossener Messraum bereitgestellt wird, wobei der Messraum zumindest teilweise innerhalb des Isolationsraum vorgesehen ist oder wird. Im Falle der erwähnten Prozessleitung, die von einer Isolationsleitung als Isolationswandung umgeben ist, kann der Messraum zumindest teilweise durch eine zusätzliche Isolationsleitung gebildet werden, wobei eine Wandung der zusätzlichen Isolationsleitung, also z.B. eine Rohrwandung, zwischen der Isolationsleitung und der Außenwand der Prozessleitung angeordnet ist oder wird. In diesem Falle ergibt sich also eine dreischichtige Leitung oder Rohrleitung. Es versteht sich, dass der Messraum in anderen Bereichen oder allgemein durch entsprechende Wandungen oder Wände abgeschlossen werden kann.

Der Messraum ist oder wird dabei mit einem Messgas befüllt, sodass das Messgas mit der Wand in Kontakt ist. Unter einem Messgas kann dabei ein Gas oder Gasgemisch verstanden werden. Es wird dann ein Druck des Messgases in dem Messraum bestimmt, und basierend auf dem Druck des Messgases wird dann die Temperatur der Wand bestimmt.

Auf diese Weise ist eine Wandtemperaturbestimmung oder Wandtemperaturmessung an Wänden, insbesondere tiefkalten Wänden, ohne Unterbrechung der Isolierung für die Anbringung einer Temperaturmesshülse oder ähnliches möglich. Über den Messraum und das darin eingebrachte Messgas kann eine indirekte Temperaturmessung über den Druck des Messgases erfolgen.

Bei sinkender Temperatur im Behältnis wird das Messgas im direkt angrenzenden Messraum über die Wand abgekühlt. Der Druck des Messgases fällt ab. Da der Druck im Messraum mit der Temperatur des Messgases korreliert, kann über den Druck des Messgases die Wandtemperatur der Prozessleitung oder allgemein des Behältnisses gemessen werden. Basierend auf der Temperatur der Wand kann dann weiterhin eine Temperatur eines Prozessfluids in dem Behältnis bestimmt werden. In vielen Fällen wird die Temperatur des Prozessfluids aber der Temperatur der Wand entsprechen oder allenfalls unwesentlich davon abweichen.

Wie erwähnt, eignet sich diese Art der Temperaturbestimmung oder Temperaturmessung besonders für tiefkalte Wände, wie sie z.B. beim Speichern oder Fördern eines tiefkalten Prozessfluids in dem Behältnis entstehen. Als Temperaturen des Prozessfluids kommen dabei bevorzugt Temperaturen von weniger als -100°C oder weniger als -200°C in Betracht.

In einer Ausführungsform wird Helium als das Messgas verwendet, da Helium einen sehr tiefen Siedepunkt hat. Denkbar ist aber auch die Verwendung von z.B. Wasserstoff oder anderen Gasen oder Gasgemischen als Messgas. Das Messgas wird sinnvollerweise und bevorzugt so gewählt, dass dieses bei der tiefsten zu erwartenden Prozesstemperatur keinen Phasenwechsel durchführt, also einfriert.

In einer Ausführungsform wird vor einem Bestimmen der Temperatur der Wand, insbesondere vor einem erstmaligen Bestimmen der Temperatur der Wand, eine Kalibrierung vorgenommen wird, über die aus dem Druck des Messgases die Temperatur der Wand bestimmbar ist. Wie erwähnt, korreliert die Temperatur des Messgases mit dem Druck. Wenn diese Korrelation bekannt ist, kann sehr einfach über den Druck die Temperatur bestimmt werden. Für viele Gase wie z.B. Helium ist eine solche Korrelation bekannt oder einfach bestimmbar. Denkbar ist auch, dass bei einer bekannten Temperatur, z.B. Raumtemperatur, der Druck bestimmt wird, sodass sich darüber auf die Temperatur bei anderen Drücken schließen lässt.

Die Messung bzw. Bestimmung der Temperatur erfolgt also nicht durch eine elektrische Messung (Widerstandsmessung), sondern durch eine Druckmessung. Daraus ergeben sich verschiedene Vorteile, die teils schon erwähnt wurden und nochmals zusammengefasst werden sollen. Die Vakuumisolierung wird nicht durchbrochen, weder elektrisch noch mechanisch. An dieser Stelle sei erwähnt, dass nicht nur die Isolationswandung nicht durchbrochen werden muss, sondern auch die Wand des Behältnisses oder der Prozessleitung selbst nicht durchbrochen werden muss. Es handelt sich um eine einfache Druckmessung, die außerhalb des tiefkalten Systems, z.B. bei Umgebungsbedingungen, stattfinden kann.

Das System bzw. die Anordnung zeichnet sich weiterhin durch folgende Vorteile aus. Es ist eine einfache Kalibrierung möglich, ebenso eine einfache Inbetriebnahme, sowie eine einfache Überwachung.

Der Messraum kann an sich beliebig ausgestaltet werden, z.B. als Rohrleitung, die in irgendeiner Weise um das Prozessrohr geführt wird, wie schon beispielhaft erwähnt; dies erlaubt einen einfachen Aufbau. Dabei sollte auf eine gute Wärmeleitung zwischen Behältnis bzw. Wand und Messraum und eine dichte Ausführung der Verbindung der einzelnen Teile des Systems, z.B. durch. Löten, Klemmen, Schweißen, geachtet werden.

Die Erfindung betrifft auch eine Anordnung aufweisend ein isoliertes Behältnis mit einer Wand und einer Isolationswandung, sodass zwischen der Wand und einer Isolationswandung ein Isolationsraum gebildet ist. Die Anordnung weist weiterhin einen zwischen der Wand und der Isolationswandung vorgesehenen, geschlossenen Messraum auf, wobei der Messraum mit einem Messgas befüllt ist oder befüllbar ist, sodass das Messgas mit der Wand in Kontakt ist. Weiterhin weist die Anordnung eine Druckmesseinrichtung auf, die eingerichtet ist, einen Druck des Messgases in dem Messraum zu bestimmen, sowie eine Recheneinheit, die eingerichtet ist, basierend auf dem Druck des Messgases eine Temperatur der Wand zu bestimmen.

Hinsichtlich weiterer Ausgestaltungen und Vorteile der Anordnung sei zur Vermeidung von Wiederholungen auf die vorstehenden Ausführungen zum Verfahren verweisen, die hier entsprechend gelten.

Die Erfindung ist anhand eines Ausführungsbeispiels in der Zeichnung schematisch dargestellt und wird im Folgenden unter Bezugnahme auf die Zeichnung beschrieben.

### Kurze Beschreibung der Zeichnung

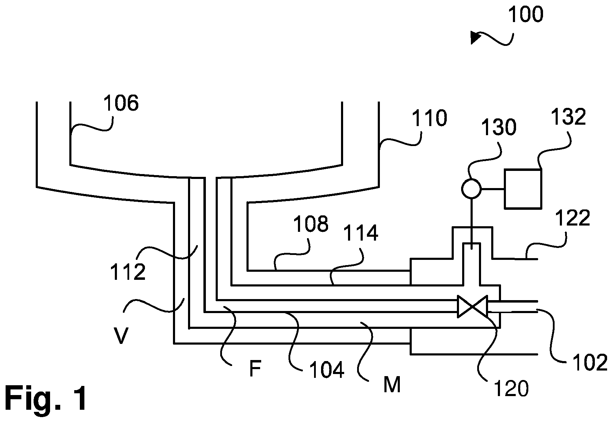

- Figur 1: zeigt schematisch eine Anordnung in einer Ausführungsform zur Erläuterung der Erfindung.

### Ausführliche Beschreibung der Zeichnung

In Figur 1 ist schematisch eine beispielhafte Anordnung 100 in einer Ausführungsform zur Erläuterung der Erfindung dargestellt. Die Anordnung 100 weist ein als Prozessleitung ausgebildetes Behältnis 102 auf. Die Prozessleitung 102 ist beispielhaft fluidverbindend mit einem inneren Behälter 106 verbunden. Mittels der Prozessleitung 102 kann z.B. tiefkaltes Prozessfluid F aus dem oder in den inneren Behälter 106 gefördert werden. Mittels eines Ventils 120 kann die Prozessleitung 102 z.B. abgesperrt werden. Die Prozessleitung 102 selbst weist eine Außenwand 104 auf, also z.B. eine Rohrwand, durch die im Grunde die Prozessleitung 102 gebildet wird.

Weiterhin weist die Anordnung eine als Isolationsleitung ausgebildete Isolationswandung 108 auf, die Prozessleitung 102 umgibt. Die Isolationswandung 108 ist mit einem den inneren Behälter 106 umgebenden äußeren Behälter 110 verbunden. Zwischen der Außenwand 104 der Prozessleitung und der Isolationsleitung 108 ist damit ein Isolationsraum V gebildet oder vorgesehen, der sich ebenfalls zwischen dem inneren Behälter 106 und äußeren Behälter 110 erstreckt. Der Isolationsraum V ist typischerweise evakuiert. Auf diese Weise wird eine isolierte Prozessleitung gebildet, sodass das in der eigentlichen Prozessleitung 102 geförderte Prozessfluid F möglichst nicht von außen erwärmt wird.

Weiterhin weist die Anordnung 100 zwischen der Wand bzw. Außenwand 104 und der Isolationswandung bzw. Isolationsleitung 108 einen geschlossenen Messraum 112 auf, der hier zumindest teilweise durch eine zusätzliche Isolationsleitung 114 gebildet wird. Auf Seiten der inneren Behälters 106 wird der Messraum 114 durch den inneren Behälter 106 begrenzt, auf Seiten des Ventils 120 umgibt eine Wandung das Ventil 120, um den Messraum zu schließen. Außerdem ist das Ventil 120, zum Teil außerhalb des Messraums 112, noch durch eine Ventilbox 122 umgeben.

In dem an sich geschlossenen Messraum 112 ist nun ein Messgas, z.B. Helium, M eingebracht. Das Messgas M ist dabei mit der Außenwand 104 der Prozessleitung 102 in Kontakt. Auf diese Weise nimmt das Messgas M die Temperatur der Außenwand 104 der Prozessleitung 102 an. Wenn sich die Temperatur der Außenwand 104, z.B. durch Änderung der Temperatur des Prozessfluids F, ändern, ändert sich also auch die Temperatur des Messgases M. Dies wiederum führt, wie erwähnt, dazu, das sich der Druck des Messgases M ändert.

Die Anordnung 100 weist nun weiterhin eine Druckmesseinrichtung 130 auf, die eingerichtet ist, einen Druck des Messgases M in dem Messraum 114 zu bestimmen oder zu messen. Dabei wird der Druck des Messgases M entfernt von der Außenwand 104 bestimmt, z.B. in einem Bereich in dem eine Umgebungstemperatur vorherrscht. Dort ist der Druck nämlich gleich wie direkt an der Außenwand 104. Die Druckmesseinrichtung ist vorzugsweise über eine Kapillare mit dem Messraum verbunden. Durch das kleine Volumen der Kapillare ist der Einfluss auf die Messgröße dabei vernachlässigbar.

Weiterhin weist die Anordnung eine Recheneinheit 132 auf, die eingerichtet ist, basierend auf dem Druck des Messgases M eine Temperatur der Außenwand 104 zu bestimmen. Dies kann z.B. durch eine geeignete Umrechnung, ggf. nach vorheriger Kalibrierung, erfolgen. Die Druckmesseinrichtung 130 und die Recheneinheit 132 können dabei auch als eine integrierte Messeinrichtung ausgebildet sein.

Auf diese Weise kann also die Temperatur der Außenwand 104 als eine Wand eines isolierten Behältnisses bestimmt werden, ohne jedoch die Isolierung selbst zu durchbrechen.

## Patentansprüche

1. Verfahren zum Bestimmen einer Temperatur einer Wand (104) eines isolierten Behältnisses (102), wobei zwischen der Wand (104) und einer Isolationswandung (108) ein Isolationsraum (V) vorgesehen ist,
wobei ein an die Wand (104) angrenzender, geschlossener Messraum (112) bereitgestellt wird, wobei der Messraum (112) zumindest teilweise innerhalb des Isolationsraums (V) vorgesehen ist oder wird,
wobei der Messraum (112) mit einem Messgas (M) befüllt ist oder wird, sodass das Messgas (M) mit der Wand (104) in Kontakt ist,
wobei ein Druck des Messgases (M) in dem Messraum (112) bestimmt wird,
und
wobei basierend auf dem Druck des Messgases (M) die Temperatur der Wand (104) bestimmt wird.

2. Verfahren nach Anspruch 1, wobei das Behältnis (102) eine Prozessleitung ist oder umfasst und wobei die Wand (104) zumindest einen Teil einer Außenwand der Prozessleitung umfasst.

3. Verfahren nach Anspruch 2, wobei die Prozessleitung von einer Isolationsleitung als Isolationswandung umgeben ist, und wobei der Messraum (112) zumindest teilweise durch eine zusätzliche Isolationsleitung (114) gebildet wird, wobei eine Wandung der zusätzlichen Isolationsleitung (114) zwischen der Isolationsleitung und der Außenwand der Prozessleitung angeordnet ist oder wird.

4. Verfahren nach einem der vorstehenden Ansprüche, wobei das Behältnis (102) zum Speichern oder Fördern eines tiefkalten Prozessfluids (F) verwendet wird, das bevorzugt eine Temperatur von weniger als -100°C oder weniger als -200°C aufweist.

5. Verfahren nach einem der vorstehenden Ansprüche, wobei der Druck des Messgases (M) entfernt von der Wand bestimmt wird, insbesondere in einem Bereich in dem eine höhere Temperatur als die Temperatur der Wand, insbesondere Umgebungstemperatur, vorherrscht.

6. Verfahren nach einem der vorstehenden Ansprüche, wobei Helium oder Wasserstoff als das Messgas (M) verwendet wird.

7. Verfahren nach einem der vorstehenden Ansprüche, wobei basierend auf der Temperatur der Wand (104) weiterhin eine Temperatur eines Prozessfluids (F) in dem Behältnis bestimmt wird.

8. Verfahren nach einem der vorstehenden Ansprüche, wobei vor einem Bestimmen der Temperatur der Wand, insbesondere vor einem erstmaligen Bestimmen, eine Kalibrierung vorgenommen wird, über die aus dem Druck des Messgases die Temperatur der Wand bestimmbar ist.

9. Anordnung (100) aufweisend ein isoliertes Behältnis (102) mit einer Wand (104) und einer Isolationswandung (108), sodass zwischen der Wand und einer Isolationswandung ein Isolationsraum (V) gebildet ist,
wobei die Anordnung (100) weiterhin einen zwischen der Wand und der Isolationswandung vorgesehenen, geschlossenen Messraum (112) aufweist,
wobei der Messraum mit einem Messgas (M) befüllt ist oder befüllbar ist, sodass das Messgas mit der Wand in Kontakt ist,
wobei die Anordnung (100) weiterhin eine Druckmesseinrichtung (130) aufweist, die eingerichtet ist, einen Druck des Messgases in dem Messraum zu bestimmen, und
wobei die Anordnung (100) weiterhin eine Recheneinheit (132) aufweist, die eingerichtet ist, basierend auf dem Druck des Messgases eine Temperatur der Wand zu bestimmen.

10. Anordnung (100) nach Anspruch 9, wobei das Behältnis eine Prozessleitung ist oder umfasst und wobei die Wand zumindest einen Teil einer Außenwand der Prozessleitung umfasst.

11. Anordnung (100) nach Anspruch 10, wobei die Prozessleitung von einer Isolationsleitung als Isolationswandung umgeben ist, wobei die Anordnung weiterhin eine zusätzliche Isolationsleitung aufweist, durch der Messraum zumindest teilweise gebildet ist, wobei eine Wandung der zusätzlichen Isolationsleitung zwischen der Isolationsleitung und der Außenwand der Prozessleitung angeordnet ist.

12. Anordnung (100) nach einem der Ansprüche 9 bis 11, wobei das Behältnis zum Speichern oder Fördern eines tiefkalten Prozessfluids eingerichtet ist, das bevorzugt eine Temperatur von weniger als -100°C oder weniger als -200°C aufweist.

13. Anordnung (100) nach einem der Ansprüche 9 bis 12, wobei die Recheneinheit weiterhin eingerichtet ist, basierend auf der Temperatur der Wand eine Temperatur eines Prozessfluids in dem Behältnis zu bestimmen.
